# EUROPÄISCHE PATENTSCHRIFT

(11) **EP 2 540 410 B1**
(45) Veröffentlichungstag und Bekanntmachung des Hinweises auf die Patenterteilung: **16.03.2016**
(21) Anmeldenummer: 12170822.6
(22) Anmeldetag: 05.06.2012
(51) Int. Cl.: B21H 3/06, F16B 25/00

(54) **Schraube und Verfahren zur Herstellung eines Schraubengewindes**
Screw and method for producing a screw thread
Vis et procédé de fabrication d'un filetage de vis

(30) Priorität: 29.06.2011 DE 102011078256
(43) Veröffentlichungstag der Anmeldung: 02.01.2013
(73) Patentinhaber: HILTI Aktiengesellschaft, 9494 Schaan (LI)
(72) Erfinder: Rosenkranz, Falk, 9658 Wildhaus (CH); Achleitner, Corinna, 6800 Feldkirch (AT)
(74) Vertreter: Hilti Aktiengesellschaft Corporate Intellectual Property

(56) Entgegenhaltungen:
- EP-A1- 0 623 759
- EP-A2- 0 533 456
- EP-A2- 1 281 874
- GB-A- 2 063 740
- FLANAGAN J D ET AL: "FLACHBACKEN-GEWINDEWALZEN OHNE OBERFLACHENFEHLER. ÖFLAT DIE THREAD ROLLING WITHOUT SURFACE FAILURES", UMFORMTECHNIK, MEISENBACH, BAMBERG, DE, Bd. 27, Nr. 4, 1. August 1993 (1993-08-01) , Seite 288/289, XP000396772, ISSN: 0300-3167

## Beschreibung

Die Erfindung betrifft eine Schraube, mit zumindest einem Gewindegang, der durch ein Walzverfahren, insbesondere ein Flachbackenwalzverfahren hergestellt ist, wobei der Gewindegang durch zwei Materialwülste, die bei dem Walzverfahren aus dem Grundkörper durch Kaltumformen gebildet sind, derart zusammengesetzt ist, dass der Gewindegang eine Schließfalte aufweist, an der die Materialwülste aufeinandertreffen. Die Erfindung betrifft ferner ein Verfahren zur Herstellung eines Schraubengewindes auf der Mantelfläche eines im Wesentlichen zylindrischen Grundkörpers mit zumindest einem Gewindegang durch Walzen, insbesondere Flachbackenwalzen.

Die Erfindung betrifft insbesondere selbstschneidende Schrauben.

Zur Herstellung von Gewinden auf Schrauben sind sogenannte Flachbackenwalzverfahren bekannt. Bei diesem Verfahren wird ein zu bearbeitender, im Wesentlichen zylindrischer Grundkörper zwischen zwei profilierten Flachbacken positioniert, und diese werden anschließend linear zueinander verschoben. Dabei wird durch Profilierungen auf den Flachbacken auf der Mantelfläche des Grundkörpers ein Gewindegang ausgeformt. Während des Walzvorgangs wird der Grundkörper zwischen den Flachbacken gedreht, sodass umlaufend auf der Mantelfläche zumindest ein durchgehender Gewindegang geformt wird. Der Gewindegang wird üblicherweise dadurch ausgebildet, dass durch die Profilierung der Flachbacken zwei Materialwülste aus dem Grundkörper der Schraube gepresst werden, die sich während des Walzens zu einem Gewindegang vereinigen. Am Übergang zwischen den Materialwülsten entsteht dabei eine sogenannte Schließfalte. Der Gewindegang wird aber durch Kaltumformen gebildet, dass heißt, die beiden Materialwülste können sich nicht vollständig stoffschlüssig miteinander verbinden. Obwohl die beiden Materialwülste formschlüssig aneinander gepresst sind, verbleibt also zwischen diesen von der Schließfalte ausgehend unter Umständen ein Spalt, der eine Materialschwächung darstellt. Die Schließfalte ist bei den bisher bekannten Verfahren genau im Scheitel des Gewindegangs angeordnet.

Der Artikel "Flachbacken-Gewindewalzen ohne Oberflächenfehler - Flat die thread rolling without surface failures" von Flanagan J D et al., UMFORMTECHNIK, MEISENBACH, BAMBERG, DE, Bd. 27, Nr. 4, 1. August 1993 (1993-08-01), Seite 288/289, XP000396772, ISSN: 0300-3167 beschreibt Gewindewalzwerkzeuge, bei denen eine Spaltbildung am Gewinde vermieden ist.

Aufgabe der Erfindung ist es, eine Schraube, insbesondere selbstschneidende Schraube, zu schaffen, die eine deutlich verbesserte Verschleißbeständigkeit aufweist. Aufgabe der Erfindung ist es ferner, ein Verfahren zur Herstellung einer solchen Schraube bereitzustellen.

Zur Lösung der Aufgabe ist bei einer Schraube der eingangs genannten Art vorgesehen, dass die Schließfalte im Bereich einer Flanke des Gewindegangs angeordnet ist. Bei den bisher bekannten Verfahren werden die Materialwülste bildlich gesprochen von beiden Seiten gleichmäßig zur Mitte des Gewindeganges hin zusammengeschoben, was eine einfache Fertigung ermöglichte, da die Profilierung der Walzbacken sehr einfach gehalten werden konnte, indem der höchste Punkt des Gewindes auch dem Übergang zwischen den beiden Materialwülsten entspricht. Jede der Profilierungen muss also lediglich eine der beiden Flanken des Gewindes ausbilden. Dadurch liegt die durch die Schließfalte bewirkte Materialschwächung vor allem bei gewindeschneidenden Schrauben in einem hochbelasteten Bereich, wodurch die Verschleißbeständigkeit des Gewindes und somit der Schraube reduziert wird.

Bei der erfindungsgemäßen Schraube erfolgt demgegenüber eine asymmetrische Gestaltung des Gewindes, wobei eine Profilierung der Walzbacken eine gesamte Flanke des Gewindes ausbildet und über den Scheitel des Gewindes hinweg auch einen Teil der gegenüberliegenden Flanke. Die zweite Profilierung bildet lediglich den verbleibenden Teil der zweiten Gewindeflanke aus. Dadurch liegt die Schließfalte im Bereich einer Flanke und nicht mehr im hochbelasteten Bereich am Scheitelpunkt des Gewindeganges, der bei einer selbstschneidenden Schraube auch die Schneidkante des Gewindes darstellt und somit hochbelastet ist. Da im Scheitelpunkt des Gewindeganges keine Materialschwächung durch die Schließfalte vorhanden ist, ist dieser Bereich wesentlich belastbarer und unterliegt dadurch vor allem beim Eindrehen in extrem harte Untergründe einer geringeren Abnutzung.

Vorzugsweise ist die Schließfalte an der entgegen der Lastwirkungsrichtung weisenden Flanke des Gewindes vorgesehen. Bei eingedrehter Schraube erfolgt die Kraftübertragung zwischen Schraube und Untergrund über die in Lastwirkungsrichtung, das heißt Auszugsrichtung weisende Flanke des Gewindegangs. Über die in Lastwirkungsrichtung abgewandte Flanke erfolgt keine oder nur eine geringe Lastabtragung. Die Schließfalte ist also so angeordnet, dass sich diese an der weniger belasteten Flanke des Gewindes befindet.

Der Winkel der Gewindeflanken kann entsprechend dem gewünschten Einsatzgebiet der Schraube beliebig angepasst werden. Für selbstschneidende Schrauben, insbesondere Betonschrauben, hat sich aber ein Gewindeflankenwinkel zwischen 15° und 30° als ideal herausgestellt, um eine gutes Schneidverhalten sowie eine möglichst hohe Lastübertragung zu gewährleisten.

Die Gewindeflankenwinkel der beiden Gewindeflanken können auch unterschiedliche Neigungen aufweisen, um eine gezielte Anpassung an den gewünschten Einsatzbereich bzw. an die Lastabtragung zu ermöglichen. Vorzugsweise ist der Gewindeflankenwinkel der in Lastwirkungsrichtung weisenden Flanke flacher ausgebildet, wodurch eine bessere Lastabtragung zwischen Schraube und Untergrund erzielt werden kann. Der Flankenwinkel der zur Schraubenspitze weisenden Gewindeflanke kann steiler ausgebildet sein, da dieser bei eingedrehter Schraube keine Lastabtragefunktion erfüllt. Da diese Gewindeflanke steiler ausgebildet ist, muss hier bei einer selbstschneidenden Schraube weniger Material verdrängt werden, sodass ein leichteres Einschrauben bzw. Einschneiden der Schraube möglich ist.

Idealerweise ist das Verhältnis des Außendurchmessers der Schraube zur Gewindesteigung des Gewindes im Bereich von 1 bis 2. Dieses Verhältnis hat sich als ideal herausgestellt, um ein einfaches Einschrauben der Schraube, aber eine möglichste hohe Lastabtragung zu erzielen.

In einem Längsschnitt betrachtet weisen die Bereiche, die in Lastwirkungsrichtung vor und hinter der Schließfalte liegen, vorzugsweise im Wesentlichen die gleichen Querschnittsflächen auf, sodass beim Walzvorgang des Gewindeganges von jeder Profilierung die gleiche Materialmenge verdrängt werden muss.

Vorzugsweise ist die Schraube eine selbstschneidende Betonschraube.

Erfindungsgemäß ist des Weiteren ein Verfahren zur Herstellung eines Schraubengewindes auf der Mantelfläche eines im Wesentlichen zylindrischen Grundkörpers mit zumindest einem Gewindegang durch Walzen, insbesondere Flachbackenwalzen vorgesehen, wobei der Gewindegang aus zwei Materialwülsten besteht, die aus dem Grundkörper durch Kaltumformen gebildet und durch das Walzverfahren zu einem Gewindegang vereinigt werden, wobei zwischen den Materialwülsten eine Schließfalte am Gewindegang gebildet wird. Die Schließfalte ist im Bereich einer der Flanken des Gewindegangs angeordnet.

Weitere Vorteile und Merkmale ergeben sich aus der nachfolgenden Beschreibung in Verbindung mit den beigefügten Zeichnungen. In diesen zeigen:
- Figur 1 eine schematische Darstellung eines Flachbackenwalzverfahrens,
- Figuren 2a - f verschiedene Abschnitte einer Walzbacke gemäß dem Stand der Technik,
- Figuren 3a - h verschiedenen Abschnitte einer bei dem erfindungsgemäßen Walzbackenverfahren verwendeten Walzbacke, und
- Figur 4 einen schematischen Schnitt durch eine erfindungsgemäße Schraube.

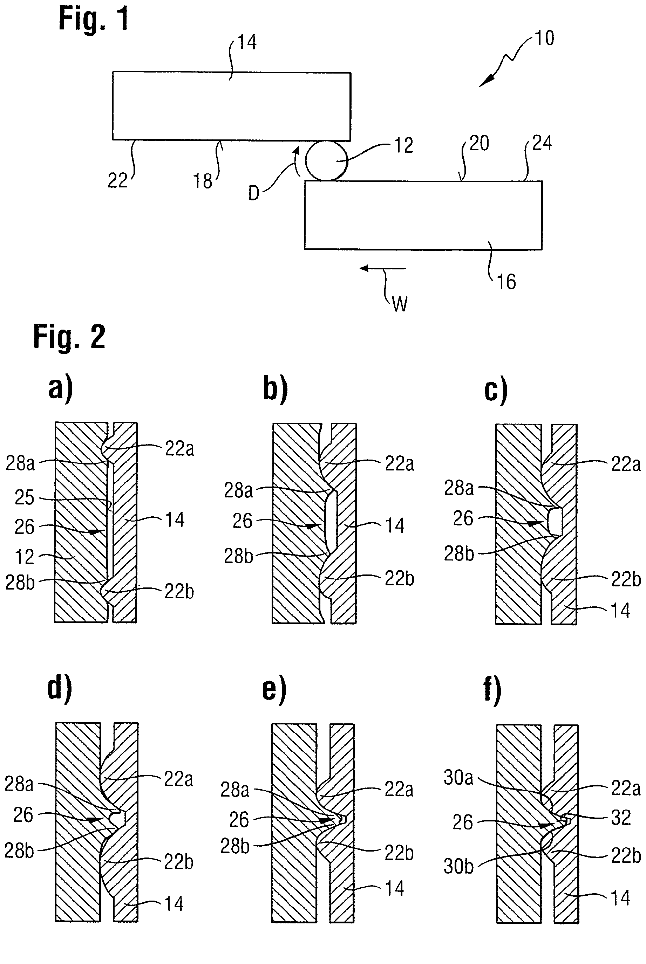

In Figur 1 ist schematisch eine Anordnung 10 zum Walzen eines Gewindeganges einer Schraube in einem im Wesentlichen zylindrischen Schrauben-Grundkörper 12 dargestellt. Diese Anordnung besteht im Wesentlichen aus zwei Walzbacken 14, 16, die jeweils eine Walzfläche 18 bzw. 20 aufweisen. Die Walzflächen 18, 20 sind parallel zueinander ausgerichtet und weisen jeweils ein Profil 22 bzw. 24 auf. Die erste Walzbacke 14 ist hier feststehend angeordnet, die zweite Walzbacke 16 ist linear parallel zu ihrer Walzfläche 20 in eine Walzrichtung W und parallel zur ersten Walzfläche 18 verschiebbar.

Der Grundkörper 12 wird zum Ausbilden eines Gewindeganges zwischen den beiden Walzbacken 14, 16 positioniert, und anschließend wird die zweite Walzbacke 16 in Walzrichtung W verschoben. Dabei wird der Grundkörper 12 zwischen den beiden Walzbacken 14, 16 in eine Drehrichtung D gerollt, wobei umlaufend durch mehrere aufeinanderfolgende Profile 22, 24 ein Gewindegang in dem Grundkörper 12 ausgeformt wird. Die Profile ändern sich mit zunehmender Walzstrecke in Höhe, Geometrie und Lage, um den Materialfluss zu steuern.

Dieser Vorgang ist für eine herkömmliche Schraube in den Figuren 2 a-f für die erste Walzbacke 14 dargestellt. Für jeden Gewindegang 26 sind an jeder der Walzbacken 14, 16 zwei Profile 22a, 22b pro Abschnitt vorgesehen, die auf der hier dargestellten ersten Walzbacke 14 in Walzrichtung W aufeinander zu laufen, das heißt ihr Abstand verringert sich, und dabei ihre Form ändern. Auf der zweiten Walzbacke 16 laufen die Profile in entgegengesetzter Richtung aufeinander zu.

Die Profile 22a, 22b werden beim Verschieben der Walzbacken 14, 16 in die Mantelfläche 25 des Grundkörper 12 eingepresst (Figur 2a) und formen im Verlauf des Walzvorgangs aus diesem zwei Materialwülste 28a, 28b heraus, aus denen im weiteren Verlauf der Gewindegang 26 gebildet wird (Figuren 2b und 2c). Im weiteren Verlauf werden diese Materialwülste 28a, 28b durch die aufeinander zu laufenden Profile 22a, 22b aufeinander zu gedrängt, bis sich die Materialwülste 28a, 28b zum Gewindegang 26 vereinigen (Figuren 2d und 2e).

Jedes der Profile 22a, 22b formt also eine Gewindeflanke 30a, 30b des fertigen Gewindegangs 26. Zwischen den Materialwülsten 28a, 28b verbleibt nach Abschluss des Walzvorgangs eine von außen kaum oder nicht zu sehende Schließfalte 32, die, wie in Figur 2f zu sehen ist, im Scheitel des Gewindegangs 26 angeordnet ist, also genau an der Schneidkante des Gewindegenages 26.

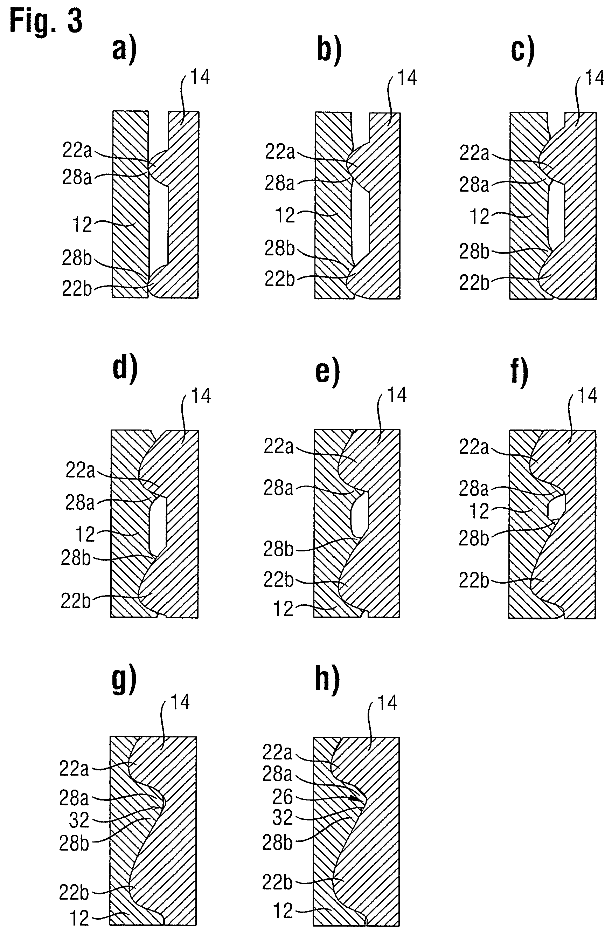

Demgegenüber ist in den Figuren 3 a bis h ein erfindungsgemäßes Verfahren zum Walzen eines Gewindes dargestellt. Die Walzbacken 14, 16 für ein erfindungsgemäßes Verfahren sind im Wesentlichen ähnlich aufgebaut. Die Walzbacken 16, 14 unterscheiden sich lediglich in der Form der Profile 22a, 22b, wie im Folgenden dargestellt wird.

Die Verfahrensschritte entsprechen ebenfalls im Wesentlichen denen der bisher bekannten Verfahren. Die Profile 22a, 22b drücken sich in den Grundkörper 12 ein (Figur 3a) und bilden jeweils einen Materialwulst 28a, 28b, wobei die Materialwülste durch die Profile 22a, 22b aufeinander zugedrängt werden (Figuren 3b-d), bis sich die Materialwülste 28a, 28b schließlich zum Gewindegang 26 vereinigen (Figuren 3e-h).

Wie insbesondere in den Figuren 3g und 3h zu sehen ist, sind die Profile 22a, 22b aber so ausgebildet, dass die Schließfalte 32 nicht Scheitel des Gewindegangs 26 angeordnet ist, sondern im Bereich einer Gewindeflanke 30b des Gewindeganges 26. Dadurch liegt die Schließfalte 32 nicht mehr im hochbelasteten Bereich des Scheitels 31, sondern in einem wesentlich weniger belasteten Bereich an der Gewindeflanke 30b des Gewindegangs 26.

Anders als bei den bisher bekannten Verfahren wird also nicht jede Gewindeflanke 30a, 30b durch eines der Profile 22a, 22b gebildet. Vielmehr formt ein Profil 22a die gesamte Gewindeflanke 30a sowie einen Teil der Gewindeflanke 30b aus, während das zweite Profil 22b lediglich den restlichen Teil der zweiten Gewindeflanke 30b ausbildet.

Um die Kräfte, die beim Walzen des Gewindegangs 26 entstehen, gleichmäßig auf beide Profile 22a, 22b zu verteilen, ist die Schließfalte 32 vorzugsweise so angeordnet, dass in einem Querschnitt betrachtet jedes der Profile 22a, 22b die gleiche Materialmenge verdrängt, also die Querschnittsfläche der Materialwülste 28a, 28b im Längsschnitt gleich groß sind.

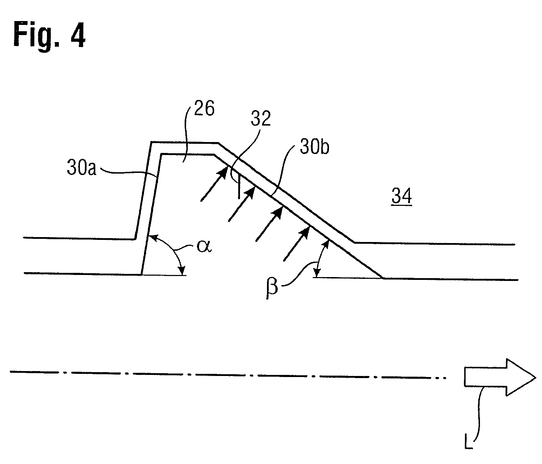

Ein Querschnitt durch einen fertigen Gewindegang ist in Figur 4 dargestellt. Durch die asymmetrische Herstellung des Gewindegangs haben die Gewindeflanken 30a, 30b unterschiedliche Flankenwinkel α, β. Der Lastwirkungswinkel β der Gewindeflanke 30b, die in Auszugsrichtung, das heißt Lastwirkungsrichtung L ausgerichtet ist, ist hier flacher ausgebildet, sodass eine bessere Lastabtragung von einem Untergrund 34 über die Gewindeflanke 30b in den Grundkörper bzw. in die Schraube erfolgen kann. Der Winkel α der zur Schraubenspitze weisenden Gewindeflanke 30a ist wesentlich steiler ausgebildet, sodass beim Schneiden des Gewindes durch diese Gewindeflanke 30a weniger Material verdrängt wird, wodurch ein leichteres Eindrehen der Schraube möglich ist. Ideale Winkel für die Gewindeflanken liegen zwischen 15° und 30°. In Figur 4 sind jedoch andere Winkel gezeigt.

Die Schüeßfalte 32 ist an der entgegen der Lastwirkungsrichtung L weisenden Gewindeflanke 30a angeordnet, sodass durch diese nicht die in Lastwirkungsrichtung weisende Flanke 30b geschwächt wird, über die die Lastabtragung in den Untergrund 34 erfolgt.

## Patentansprüche

1. Schraube, mit zumindest einem Gewindegang (26), der durch ein Walzverfahren, insbesondere ein Flachbackenwalzverfahren, hergestellt ist, wobei der Gewindegang (26) durch zwei Materialwülste (28a, 28b), die bei dem Walzverfahren aus dem Grundkörper (12) durch Kaltumformen gebildet sind, derart zusammengesetzt ist, dass der Gewindegang (26) eine Schließfalte (32) aufweist, an der die Materialwülste (28a, 28b) aufeinandertreffen,
**dadurch gekennzeichnet, dass** die Schließfalte im Bereich einer Gewindeflanke (30a, 30b) des Gewindegangs (26) angeordnet ist.

2. Schraube nach Anspruch 1, **dadurch gekennzeichnet, dass** die Schließfalte (32) an der entgegen der Lastwirkungsrichtung (L) weisenden Gewindeflanke (30a) des Gewindegangs (26) vorgesehen ist.

3. Schraube nach einem der vorhergehenden Ansprüche, **dadurch gekennzeichnet, dass** die Gewindeflankenwinkel (α, β) zwischen 15° und 30° betragen.

4. Schraube nach einem der vorhergehenden Ansprüche, **dadurch gekennzeichnet**, däss Gewindeflänkenwinkel (α, β) Unterschiedliche Neigungen aufweisen.

5. Schraube nach einem der vorhergehenden Ansprüche, **dadurch gekennzeichnet, dass** der Gewindeflankenwinkel (β) der in Lastwirkungsrichtung (L) weisenden Gewindeflanke (30b) flacher ausgebildet ist.

6. Schraube nach einem der vorhergehenden Ansprüche, **dadurch gekennzeichnet, dass** das Verhältnis des Außendurchmessers der Schraube zur Gewindesteigung des Gewindes im Bereich von 1 bis 2 liegt.

7. Schraube nach einem der vorhergehenden Ansprüche, **dadurch gekennzeichnet, dass** in einem Längsschnitt betrachtet die Bereiche, die in Lastwirkungsrichtung (L) vor und hinter der Schließfalte (32) liegen, im Wesentlichen die gleiche Querschnittsfläche aufweisen.

8. Schraube nach einem der vorhergehenden Ansprüche, **dadurch gekennzeichnet, dass** die Schraube eine selbstschneidende Betonschraube ist.

9. Verfahren zur Herstellung eines Schraubengewindes auf der Mantelfläche eines im Wesentlichen zylindrischen Grundkörpers (12) mit zumindest einem Gewindegang (26) durch Walzen, insbesondere Flachbackenwalzen,
wobei der Gewindegang (26) aus zwei Materialwülsten (28a, 28b) besteht, die aus dem Grundkörper (12) durch Kaltumformung gebildet und durch das Walzverfahren zum Gewindegang (26) vereinigt werden, wobei zwischen den Materialwülsten (28a, 28b) eine Schließfalte (32) am Gewindegang (26) gebildet wird,
**dadurch gekennzeichnet, dass** die Schließfalte (32) im Bereich einer der Flanken (30a, 30b) des Gewindegangs (26) angeordnet ist.

## Claims

1. Screw with at least one thread (26), which is produced through a rolling process, particularly a flat die rolling process, in which the thread (26) is made up of two bulges of material (28a, 28b), which are formed from the basic body (12) in the rolling process by cold forming, in such a way that the thread (26) has a closure fold (32), at which the bulges of material (28a, 28b) meet each other,
**characterised in that** the closure fold is arranged in the area of a thread flank (30a, 30b) of the thread (26).

2. Screw according to claim 1, **characterised in that** the closure fold (32) is provided on the thread flank (30a) of the thread (26) facing against the direction of effect of the load (L).

3. Screw according to one of the previous claims, **characterised in that** the thread flank angles (α, ß) are between 15° and 30°.

4. Screw according to one of the previous claims, **characterised in that** the thread flank angles (α, ß) have different inclinations.

5. Screw according to one of the previous claims, **characterised in that** the thread flank angle (ß) of the thread flank (30b) facing in the direction of effect of the load is made shallower.

6. Screw according to one of the previous claims, **characterised in that** the ratio of the outer diameter of the screw to the pitch of the thread is in the range from 1 to 2.

7. Screw according to one of the previous claims, **characterised in that** the areas, which lie before and after the closure fold (32) in the direction of effect of the load (L), essentially have the same cross sectional area, when considered in a longitudinal section.

8. Screw according to one of the previous claims, **characterised in that** the screw is a self tapping concrete screw.

9. Method for producing a screw thread on the lateral surface of an essentially cylindrical basic body (12) with at least one thread (26) by rolling, particularly flat die rolling,
in which the thread (26) consists of two bulges of material (28a, 28b), which are formed from the basic body (12) by cold forming and combined into the thread (26) by the rolling process, in which a closure fold (32) is formed on the thread (26) between the bulges of material (28a, 28b),
**characterised in that** the closure fold (32) is arranged in the area of one of the flanks (30a, 30b) of the thread (26)

## Revendications

1. Vis comportant au moins un filet de vis (26) qui est fabriqué par un procédé de roulage, en particulier un procédé de roulage à matrices plates, dans lequel le filet de vis (26) est assemblé par deux bourrelets de matière (28a, 28b) qui sont formés par formage à froid à partir du corps principal (12) lors du procédé de roulage, de telle sorte que le filet de vis (26) comporte un pli de fermeture (32) où les bourrelets de matière (28a, 28b) se rencontrent l'un l'autre,
**caractérisée en ce que** le pli de fermeture est agencé dans la zone d'un flanc de filet (30a, 30b) du filet de vis (26).

2. Vis selon la revendication 1, **caractérisée en ce que** le pli de fermeture (32) est prévu sur le flanc de filet (30a) du filet de vis (26) opposé à la direction d'application de charge (L).

3. Vis selon l'une des revendications précédentes, **caractérisée en ce que** les angles de flanc de filet (α, ß) sont compris entre 15° et 30°.

4. Vis selon l'une des revendications précédentes, **caractérisée en ce que** les angles de flanc de filet (α, ß) ont différentes inclinaisons.

5. Vis selon l'une des revendications précédentes, **caractérisée en ce que** l'angle de flanc de filet (ß) du flanc de filet (30b) dirigé dans la direction d'application de charge (L) est formé de manière plus plate.

6. Vis selon l'une des revendications précédentes, **caractérisée en ce que** le rapport entre le diamètre extérieur de la vis et le pas de vis du filetage est dans la plage de 1 à 2.

7. Vis selon l'une des revendications précédentes, **caractérisée en ce que** les zones vues dans une coupe longitudinale, qui se situent dans la direction d'application de charge (L) avant et après le pli de fermeture (28), ont sensiblement la même aire de section transversale.

8. Vis selon l'une des revendications précédentes, caractérisée ce que la vis est une vis à béton autotaraudeuse.

9. Procédé de fabrication d'un filetage de vis sur la surface extérieure d'un corps principal sensiblement cylindrique (12) comportant au moins un filet de vis (12) par roulage, en particulier par roulage à matrices plates,
dans lequel le filet de vis (26) est constitué de deux bourrelets de matière (28a, 28b), qui sont formés à partir du corps principal (12) par formage à froid et sont réunis par le procédé de roulage jusqu'au filet de vis (26), dans lequel un pli de fermeture (32) est formé sur le filet de vis (26) entre les bourrelets de matière (28a, 28b),
caractérisé ce que le pli de fermeture (32) est agencé dans la zone de l'un des flancs (30a, 30b) du filet de vis (26).
